# EUROPEAN PATENT SPECIFICATION

(11) **EP 4 366 502 B1**
(45) Date of publication and mention of the grant of the patent: **11.06.2025**
(21) Application number: 22769412.2
(22) Date of filing: 07.07.2022
(51) Int. Cl.: A01C 7/20, A01B 63/114, A01B 63/00

(54) **METHOD FOR CALIBRATION OF AN AGRICULTURAL IMPLEMENT AND AGRICULTURAL IMPLEMENT**
VERFAHREN ZUR KALIBRIERUNG EINES LANDWIRTSCHAFTLICHEN ARBEITSGERÄTS UND LANDWIRTSCHAFTLICHES ARBEITSGERÄT
PROCÉDÉ D'ÉTALONNAGE D'UN OUTIL AGRICOLE, ET OUTIL AGRICOLE

(30) Priority: 09.07.2021 SE 2150921
(43) Date of publication of application: 15.05.2024
(73) Proprietor: Väderstad Holding AB, 590 21 Väderstad (SE)
(72) Inventor: GILSTRING, Gert, 592 92 Vadstena (SE); STARK, Crister, 590 21 Väderstad (SE)
(74) Representative: AWA Sweden AB
(86) International application number: PCT/SE2022/050701
(87) International publication number: WO 2023/282842

(56) References cited:
- EP-A1- 3 469 868
- WO-A1-2014/066654
- WO-A1-2021/080494
- US-A1- 2019 254 223

## Description

### Technical field

This document relates to a method for calibration of the working depth, in particular the sowing depth, of an agricultural implement for distributing granular material to the ground over which the agricultural implement is travelling.

The method has a particular application to seed drills and precision seed drills, in particular to those drills that use furrow openers with disc tools or disc shares.

### Background

When sowing crops, it is a known rule of thumb that a sowing depth of approximately 10 times the diameter of the seed is often desirable. For grains, this often means a sowing depth of about 4 cm, and for oil-yielding plants a sowing depth of 2-3 cm. This means that it is desirable to be able to control the sowing depth with a high degree of precision.

A known method for controlling the sowing depth is to spring-load the furrow openers and to vary the speed of travel in order to compensate for varying hardness of the soil.

It is also known to provide seed drills with support wheels, which limit the penetration of the furrow opener into the ground. There are seed drills that have one or more support wheels for each individual output unit, such as furrow opener or row unit. By adjusting the position of a gauge wheel in relation to a furrow opener, it is possible to control, with a high degree of precision, the depth at which the seed is placed. There are also seed drills that have a centrally adjustable working depth. Such seed drills are disclosed in WO2021/080494A1, for example.

Seed drills, in particular those parts of the seed drill coming into contact with the soil, are exposed to wear. It is generally the case, for example, that discs for disc shares are used for so long that their diameter decreases by several cm. It will be appreciated that this reduction of the diameter can have a considerable impact on the sowing depth that is obtained.

Seed drills are known from e.g. EP3469868A1, US2019254223A1 and WO2014066654A1.

There is therefore a need to be able to ensure that a correct sowing depth is always obtained.

### Summary

It is an object of this document to provide a method for ensuring that a correct sowing depth is obtained. A particular object is to provide such a method that is additionally user friendly and efficient in terms of time.

The invention is defined by the accompanying independent claims. Embodiments are set forth in the accompanying dependent claims, in the description that follows and in the accompanying drawings.

According to a first aspect, a method is made available for calibration of the working depth of an agricultural implement for distributing granular material to the ground over which the agricultural implement is travelling, The agricultural implement has an output unit comprising a ground-engaging tool for forming a furrow, a gauge wheel, and at least one actuator for controlling the ground pressure on the tool or for controlling the position of the gauge wheel relative to the tool. The method comprises placing the agricultural implement on a ground surface that is level and sufficiently hard for the tool not to penetrate into the ground surface, wherein a load from the output unit bears on one of tool and gauge wheel, using the actuator to transfer the load to the other of tool and gauge wheel, recording a first parameter of the actuator while the load is being transferred, which first parameter indicates a force on the actuator, recording a second parameter for the gauge wheel in relation to the tool while the load is being transferred, which second parameter indicates a relative vertical position between the gauge wheel and the tool, identifying a change of the first parameter that occurs when the load is transferred, and assigning the change to a value of the second parameter.

The method thus comprises placing the output unit such that it bears on one of tool and gauge wheel, and then transferring the load to the other of tool and gauge wheel.

The ground surface can be, for example, a concrete floor, or a ground covering of stone, concrete or asphalt. Alternatively, the ground surface can consist of extremely densely packed sand, gravel or earth.

It will be appreciated that the load can be transferred by means of the actuator being driven to move the depth regulator downwards, wherein the force on the actuator increases when the depth regulator takes over the load, or that the load can be transferred by means of the actuator being driven, or unloaded, to move the depth regulator upwards, wherein the force on the actuator decreases when the tool takes over the load.

In this way, a weight transfer is effected from one of tool and depth regulator to the other of tool and depth regulator.

At the same time, the second parameter is recorded, which indicates for example a certain position of the actuator.

Therefore, by means of the method, the height of the tool relative to the depth regulator is determined based on the force needed to lift the tool from the ground. The position where the change of force is measured can be set as a zero point, i.e. the position where the working depth is zero.

A calibration method is thus obtained which permits calibration of the output unit, such that wear, for example, can be taken into account.

According to some embodiments, the actuator can be arranged to control the position of the gauge wheel relative to the tool, wherein the method can comprise transferring weight from the tool to the gauge wheel, and wherein the first parameter can indicate an increase of the load on the actuator.

Alternatively, or in addition, the actuator can be arranged to control the position of the gauge wheel relative to the tool, wherein the method comprises transferring weight from the gauge wheel to the tool, and the first parameter indicates a decrease of the load on the actuator.

The actuator can be designed for adjustment of a single output unit, a subset of the output units of the agricultural implement, or all of the output units of the agricultural implement.

The actuator can be an electrical actuator, wherein said first parameter indicates a drive current for the actuator, and wherein said change can comprise a change of the drive current.

Alternatively, the actuator can be a hydraulic actuator, wherein said first parameter indicates a pressure that is present in the actuator, and wherein the change can comprise a change of the pressure.

The agricultural implement can comprise a first actuator arranged to control the position of the gauge wheel relative to the tool, and a second actuator arranged to control the ground pressure for the output unit. The first parameter is detected at said first actuator.

The output unit can comprise a unit frame, which is mounted movably on an implement frame, wherein the tool and the gauge wheel are supported by the unit frame.

The unit frame can comprise one or more parts, which can be movable relative to one another.

The tool can comprise at least one disc tool, such as a furrow opener disc.

The gauge wheel can overlap the disc tool, seen in a vertical plane containing a work direction.

The method can further comprise a step in which, when driving the agricultural implement across field, a working depth is set based on said assignment of the change to a value of the second parameter.

According to a second aspect, an agricultural implement is provided for distributing granular material to the ground over which the agricultural implement is travelling. The agricultural implement comprises an output unit, comprising a ground-engaging tool for forming a furrow, a gauge wheel, at least one actuator for controlling the position of the gauge wheel relative to the tool, and a control unit, which is arranged to control the actuator. The control unit is so configured that, when the agricultural implement is placed on a ground surface that is level and sufficiently hard for the tool not to penetrate into the ground surface, a load from the output unit bears on one of tool and gauge wheel, a first parameter of the actuator is recorded while the load is being transferred, which first parameter indicates a force on the actuator, a second parameter for the gauge wheel in relation to the tool is recorded while the load is being transferred, which second parameter indicates a relative vertical position between the gauge wheel and the tool, a change of the first parameter is identified that occurs when the load is transferred, and the change is assigned to a value of the second parameter.

The agricultural implement can comprise a first actuator arranged to control the position of the gauge wheel relative to the tool, and a second actuator arranged to control the ground pressure for the output unit. Said first actuator can have an arrangement for detecting the first parameter.

The agricultural implement comprises a depth adjustment mechanism, for adjusting the working depth, and a ground pressure adjustment mechanism, wherein the depth adjustment mechanism has a position sensor for recording the second parameter.

### Brief description of the drawings

Figs 1a-1b show schematic views of an agricultural implement 1 coupled to a towing vehicle 2.
Fig. 2 shows a schematic side view of an agricultural implement with an output unit in a transport position.
Fig. 3 shows a schematic side view of an output unit in a work position.
Figs 4a-4b show schematic views of a method for calibration of the output unit.

### Detailed description

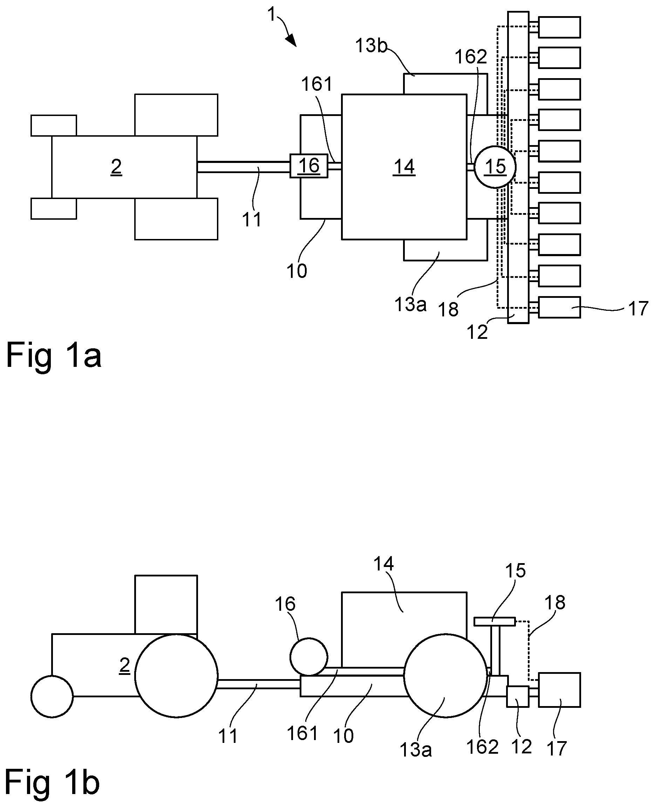

Figs 1a-1b show equipment comprising an agricultural implement 1 which is coupled to a towing vehicle 2, which is illustrated in the form of a tractor.

The agricultural implement 1 is illustrated in the form of a seed drill, which in Figs 1a-1b consists of a volumetrically fed seed drill. It will be appreciated that the concepts described herein can also be applied to a precision seed drill.

The agricultural implement 1 has a main frame 10, to which a draw bar 11 and a transverse beam 12 are connected. The main frame 10, the draw bar 11 and the beam 12 can be arranged fixed in relation to one another. One, two or more wheels 13a, 13b can be arranged to completely or partially support the agricultural implement 1. Alternatively, two or more of the parts 10, 11, 12 can be mounted movably relative to one another. Specifically, the beam 12 can comprise one, two, three, four or five portions which are movable relative to one another and which can be arranged such that the beam 12 can be folded between a work position of large width and a transport position of small width.

The main frame 10 can support one or more containers 14, for the material that is to be distributed, a fan 16 for generating an air flow that can be passed through a primary channel 161, 162, via a feeder 141 for output from the container, to a distributor 15 in which the air flow mixed with material is distributed via secondary channels 18 to a plurality of output units 17.

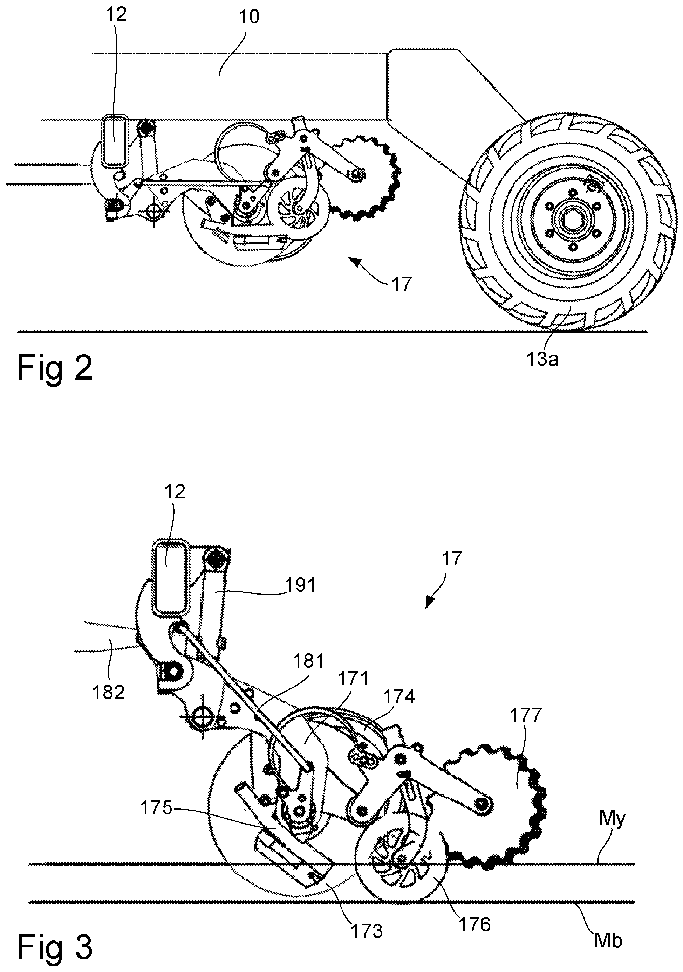

Fig. 2 shows the agricultural implement 1 with the output unit 17 in a folded-up position, for example for road transport.

Fig. 3 shows the agricultural implement 1 with the output unit 17 in the work position.

With reference to Fig. 3, an output unit 17 can comprise a unit frame 171, which supports a plurality of of functional components of the output unit 17.

The output unit 17 can comprise a furrow opener 173 which can have the form of a disc tool, which can be rotatable in a disc plane that can be vertical and, seen in a horizontal plane, can have an acute angle to a vertical plane containing the work direction F. Alternatively, the disc plane can slope slightly. The function of the furrow opener is to open a furrow in which the material, for example seeds, fertilizer and/or pesticide, can be placed.

The furrow opener 173 can be mounted rotatably on a lower portion of the unit frame 171.

The output unit 17 can comprise a depth regulator 174 which can have the form of a wheel, which can be adjustable in height relative to the furrow opener 173, such that a working depth of the furrow opener is controllable with the aid of the depth regulator 174.

The depth regulator 174 can be connected to an adjustment device 181, 182 for adjusting a working depth for the output unit 17.

The adjustment device can comprise a plurality of links 181, 182, which are connected to the depth regulator 174.

For example, a depth regulator in the form of a wheel can be arranged on a lever arm, which is rotatable about an axle to which a first link 181 is connected, such that translation of the link 181 causes the axle to rotate, thus changing the vertical position of the depth regulator.

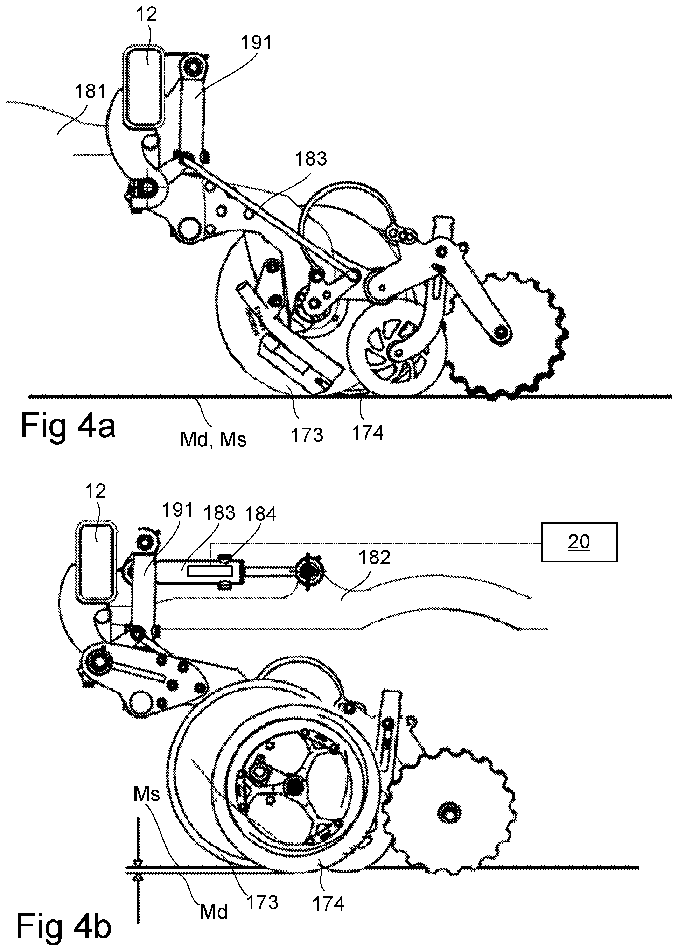

The first link 181 can be connected directly to an actuator 183 (Fig. 4a) for depth adjustment or to another link 182, which in turn can be connected to the actuator 183.

In some embodiments, the actuator 183 can be a hydraulic actuator. In other embodiments, the actuator can be an electrical actuator.

In some embodiments, the actuator 183 can be configured to control the depth adjustment for a single output unit 17.

In other embodiments, the actuator 183 can be configured to control the depth adjustment for a group of output units. Such a group can be a subset of all the output units 17 of the agricultural implement. For example, the group can be output units associated with one side section of the agricultural implement, or a subset of the output units of such a side section.

In further embodiments, the actuator 183 can be configured to control the depth adjustment for all the output units of the agricultural implement.

The output unit 17 can comprise a material outlet 175, which can have the form of a pipe, a share or a blade. The material outlet 175 can be fixed or movable relative to the unit frame 171.

The output unit can moreover comprise a press wheel 176, which can be arranged directly behind the output unit 175, seen in the work direction, and which can have the function of ensuring that output material comes properly into contact with the soil at the bottom of the furrow.

The output unit can further comprise a closer 177 for closing the furrow that is formed by the furrow opener. The closer can comprise one or more closer wheels, scrapers or the like for placing soil back in the furrow.

A ground pressure actuator 191 can be arranged to interact with the output unit 17. Such a ground pressure actuator 191 can act between a portion 12 of the implement frame and the unit frame 171 for the purpose of applying a pressure to the ground, such that a desired sowing depth can be obtained.

As is illustrated in Fig. 3, the lower portion of the depth regulator 174 can bear against a ground surface My, wherein a lower portion of the furrow opener 173 produces a furrow with a bottom at a level Mb, which is located vertically below the ground surface My.

With reference to Figs 4a-4b, a method of calibrating the furrow opener in relation to the depth regulator 174 will now be described.

Fig. 4a shows a first step in a calibration method, in which the agricultural implement 1 is placed on a substantially level ground surface that is sufficiently hard for the furrow opener 173 not to penetrate into the ground surface. The implement then sinks down such that the furrow opener 173 bears against the ground.

With reference to Fig. 4b, the method preferably proceeds from a position in which substantially the whole weight of the output unit bears on the furrow opener 173 and substantially no weight bears on the gauge wheel 174. From this position, the actuator 183 which controls the gauge wheel 174 is manoeuvred such that the gauge wheel 174 is placed against the ground surface, and moreover so as to lift the furrow opener 173, while a first parameter which indicates the force exerted by the actuator 183 is recorded, and a second parameter which indicates a position of the actuator 183 is recorded.

By analysing the first parameter, it is possible to decide when the furrow opener 173 begins to lift from the ground surface, since the force exerted by the actuator will then increase on account of the fact that the depth regulator, from this point, will markedly increase, since it thereafter bears a greater load. By identifying the second parameter and assigning a value thereof to the increase of the force, it is possible to determine a zero position for the actuator, i.e. a position where the working depth is zero.

Upon activation of the output unit 17, it is then possible to proceed from the zero position in adjustment of the working depth.

The actuator 183 can be provided with a sensor 184 for detection of pressure or drive current and/or for detection of the position of the actuator. The sensor 184 and the actuator 183 can be connected to a control unit 20, with the assistance of which the above-discussed analysis and control are performed.

The control unit 20 can be configured with such functions as are necessary, and known per se, for the control of hydraulic or electrical actuators.

The control unit 20 can be a central control unit for the agricultural implement 1 or can be part of a control unit of the towing vehicle. For example, the control unit can be implemented as special software or as a function in a general control unit.

Alternatively, the operation can be performed the other way, i.e. the gauge wheel starts in a position in which substantially the whole weight of the output unit is taken up by the gauge wheel, the latter being drawn upward for adjustment of a greater working depth. In such a method, a force reduction on the actuator which controls the position of the gauge wheel can be recorded when the load transfers from the depth regulator to the tool.

The calibration method described herein can also be used for other types of agricultural implements which comprise ground-engaging tools and some form of depth regulator, such as wheels, where the tool and the depth regulator are adjustable in height relative to each other.

The calibration method has a particular application in agricultural implements with some form of disc tool, for example in seed drills and precision seed drills, but it can also be used, for example, for disc harrows or disc cultivators.

## Claims

1. Method for calibration of working depth of an agricultural implement (1) for distributing granular material to the ground over which the agricultural implement is travelling,
the agricultural implement (1) having an output unit (17) comprising a ground-engaging tool (173) for forming a furrow, a gauge wheel (174), and at least one actuator (183) for controlling the position of the gauge wheel (174) relative to the tool (173),
wherein the method comprises:
placing the agricultural implement (1) on a ground surface that is level and sufficiently hard for the tool (173) not to penetrate into the ground surface,
wherein a load from the output unit (17) bears on one of the tool (173) and the gauge wheel (174),
using the actuator (183) to transfer the load to the other one of the tool (173) and the gauge wheel (174),
recording a first parameter of the actuator (183) while the load is being transferred, which first parameter indicates a force on the actuator (183),
recording a second parameter for the gauge wheel (174) in relation to the tool (173) while the load is being transferred, which second parameter indicates a relative vertical position between the gauge wheel (174) and the tool (173),
identifying a change of the first parameter that occurs when the load is transferred, and
assigning the change to a value of the second parameter.

2. Method according to Claim 1, wherein the actuator (183) is arranged to control the position of the gauge wheel (174) relative to the tool (173), wherein the method comprises transferring weight from the tool (173) to the gauge wheel (174), and wherein the first parameter indicates an increase of the load on the actuator (183).

3. Method according to Claim 1, wherein the actuator (183) is arranged to control the position of the gauge wheel (174) relative to the tool (173), wherein the method comprises transferring weight from the gauge wheel (174) to the tool (173), and wherein the first parameter indicates a decrease of the load on the actuator (183).

4. Method according to any of the preceding claims, wherein the actuator (183) is designed for adjustment of:
a single output unit (17);
a subset of the output units (17) of the agricultural implement (1); or
all of the output units (17) of the agricultural implement (1).

5. Method according to any of the preceding claims, wherein the actuator (183) is an electrical actuator, and wherein said first parameter indicates a drive current for the actuator, and wherein said change comprises a change of the drive current.

6. Method according to any of Claims 1-4, wherein the actuator (183) is a hydraulic actuator, and wherein said first parameter indicates a pressure that is present in the actuator, and wherein the change comprises a change of the pressure.

7. Method according to any of the preceding claims, wherein the output unit comprises a unit frame (171) which is movably mounted on an implement frame (12), wherein the tool (173) and the gauge wheel (174) are supported by the unit frame (171).

8. Method according to any of the preceding claims, wherein the tool comprises at least one disc tool, such as a seed furrow-opener disc.

9. Method according to Claim 8, wherein the gauge wheel (174) overlaps the disc tool (173), seen in a vertical plane containing a work direction (F).

10. Method according to any of the preceding claims, further comprising a step in which, when driving the agricultural implement (1) across field, a working depth is set on the basis of said assignment of the change to a value of the second parameter.

11. Agricultural implement (1) for distributing granular material to ground over which the agricultural implement is travelling, comprising:
an output unit (17) comprising a ground-engaging tool (173) for forming a furrow,
a gauge wheel (174),
at least one actuator (183) for controlling the position of the gauge wheel (174) relative to the tool (173), and
a control unit (20) which is arranged to control the actuator (183),
wherein the control unit (20) is configured:
when the agricultural implement (1) is placed on a ground surface that is level and sufficiently hard for the tool (173) not to penetrate into the ground surface, such that a load from the output unit (17) bears on one of tool (173) and gauge wheel (174),
to manoeuvre the actuator (183) to transfer the load to the other of tool (173) and gauge wheel (174),
to record a first parameter of the actuator (183) while the load is being transferred, which first parameter indicates a force on the actuator (183, 191),
to record a second parameter for the gauge wheel (174) in relation to the tool (173) while the load is being transferred, which second parameter indicates a relative vertical position between the gauge wheel (174) and the tool (173),
to identify a change of the first parameter that occurs when the load is transferred, and
to assign the change to a value of the second parameter,
wherein the agricultural implement (1) has a depth adjustment mechanism (181, 182, 183) for adjusting the working depth, and a ground pressure adjustment mechanism, wherein the depth adjustment mechanism (181, 182, 183) has a position sensor (184) for recording the second parameter.

12. Agricultural implement (1) according to Claim 11, wherein the actuator (183) has a position sensor (184) for recording the second parameter.

## Patentansprüche

1. Verfahren zur Kalibrierung der Arbeitstiefe eines landwirtschaftlichen Arbeitsgerätes (1) zum Ausbringen von körnigem Material auf den Boden, über den das landwirtschaftliche Arbeitsgerät fährt,
wobei das landwirtschaftliche Arbeitsgerät (1) eine Ausgabeeinheit (17) aufweist, die ein bodengreifendes Werkzeug (173) zum Bilden einer Furche, ein Tiefenführungsrad (174) und mindestens einen Aktuator (183) zum Steuern der Position des Tiefenführungsrads (174) relativ zum Werkzeug (173) umfasst,
wobei das Verfahren Folgendes umfasst:
Platzieren des landwirtschaftlichen Arbeitsgerätes (1) auf einer ebenen und ausreichend harten Bodenoberfläche, sodass das Werkzeug (173) nicht in die Bodenoberfläche eindringt,
wobei eine Last der Ausgabeeinheit (17) auf einem von dem Werkzeug (173) und dem Tiefenführungsrad (174) ruht,
Übertragen der Last mittels des Aktuators (183) auf das jeweils andere von dem Werkzeug (173) und dem Tiefenführungsrad (174),
Aufzeichnen eines ersten Parameters des Aktuators (183) während des Übertragens der Last, wobei der erste Parameter eine auf den Aktuator (183) wirkende Kraft angibt,
Aufzeichnen eines zweiten Parameters für das Tiefenführungsrad (174) in Bezug auf das Werkzeug (173) während des Übertragens der Last, wobei der zweite Parameter eine relative vertikale Position zwischen dem Tiefenführungsrad (174) und dem Werkzeug (173) angibt,
Erkennen einer Änderung des ersten Parameters, die beim Übertragen der Last auftritt, und
Zuordnen der Änderung zu einem Wert des zweiten Parameters.

2. Verfahren nach Anspruch 1, wobei der Aktuator (183) dazu eingerichtet ist, die Position des Tiefenführungsrades (174) relativ zum Werkzeug (173) zu steuern, wobei das Verfahren das Übertragen von Gewicht von dem Werkzeug (173) auf das Tiefenführungsrad (174) umfasst und wobei der erste Parameter eine Erhöhung der Last auf den Aktuator (183) angibt.

3. Verfahren nach Anspruch 1, wobei der Aktuator (183) dazu eingerichtet ist, die Position des Tiefenführungsrades (174) relativ zum Werkzeug (173) zu steuern, wobei das Verfahren das Übertragen von Gewicht von dem Tiefenführungsrad (174) auf das Werkzeug (173) umfasst und wobei der erste Parameter eine Verringerung der Last auf den Aktuator (183) angibt.

4. Verfahren nach einem der vorhergehenden Ansprüche, wobei der Aktuator (183) zur Einstellung ausgelegt ist von:
einer einzelnen Ausgabeeinheit (17);
einer Teilmenge der Ausgabeeinheiten (17) des landwirtschaftlichen Arbeitsgerätes (1); oder
allen Ausgabeeinheiten (17) des landwirtschaftlichen Arbeitsgerätes (1).

5. Verfahren nach einem der vorhergehenden Ansprüche, wobei der Aktuator (183) ein elektrischer Aktuator ist und wobei der erste Parameter einen Antriebsstrom für den Aktuator angibt und wobei die Änderung eine Änderung des Antriebsstroms umfasst.

6. Verfahren nach einem der Ansprüche 1-4, wobei der Aktuator (183) ein hydraulischer Aktuator ist und wobei der erste Parameter einen im Aktuator anliegenden Druck angibt und wobei die Änderung eine Änderung des Drucks umfasst.

7. Verfahren nach einem der vorhergehenden Ansprüche, wobei die Ausgabeeinheit einen Einheitenrahmen (171) umfasst, der bewegbar an einem Geräterahmen (12) gelagert ist, wobei das Werkzeug (173) und das Tiefenführungsrad (174) durch den Einheitenrahmen (171) getragen werden.

8. Verfahren nach einem der vorhergehenden Ansprüche, wobei das Werkzeug mindestens ein Scheibenwerkzeug, beispielsweise eine Saatfurchenöffnerscheibe, umfasst.

9. Verfahren nach Anspruch 8, wobei das Tiefenführungsrad (174), in einer vertikalen Ebene mit einer Arbeitsrichtung (F) gesehen, das Scheibenwerkzeug (173) überlappt.

10. Verfahren nach einem der vorhergehenden Ansprüche, ferner umfassend einen Schritt, in dem beim Fahren des landwirtschaftlichen Arbeitsgerätes (1) über das Feld eine Arbeitstiefe auf Basis der Zuordnung der Änderung zu einem Wert des zweiten Parameters eingestellt wird.

11. Landwirtschaftliches Arbeitsgerät (1) zum Ausbringen von körnigem Material auf den Boden, über den das landwirtschaftliche Arbeitsgerät fährt, umfassend:
eine Ausgabeeinheit (17) mit einem bodengreifenden Werkzeug (173) zum Bilden einer Furche,
ein Tiefenführungsrad (174),
mindestens einen Aktuator (183) zum Steuern der Position des Tiefenführungsrades (174) relativ zum Werkzeug (173) und
eine Steuereinheit (20), die zum Steuern des Aktuators (183) eingerichtet ist,
wobei die Steuereinheit (20) dazu ausgelegt ist:
wenn das landwirtschaftliche Arbeitsgerät (1) auf einer ebenen und ausreichend harten Bodenoberfläche platziert ist, sodass das Werkzeug (173) nicht in die Bodenoberfläche eindringt und eine Last der Ausgabeeinheit (17) auf einem von dem Werkzeug (173) und dem Tiefenführungsrad (174) ruht,
den Aktuator (183) zu betätigen, um die Last auf das jeweils andere von dem Werkzeug (173) und dem Tiefenführungsrad (174) zu übertragen,
einen ersten Parameter des Aktuators (183) während des Übertragens der Last aufzuzeichnen, wobei der erste Parameter eine auf den Aktuator (183, 191) wirkende Kraft angibt,
einen zweiten Parameter für das Tiefenführungsrad (174) in Bezug auf das Werkzeug (173) während des Übertragens der Last aufzuzeichnen, wobei der zweite Parameter eine relative vertikale Position zwischen dem Tiefenführungsrad (174) und dem Werkzeug (173) angibt,
eine Änderung des ersten Parameters zu erkennen, die beim Übertragen der Last auftritt, und
die Änderung einem Wert des zweiten Parameters zuzuordnen,
wobei das landwirtschaftliche Arbeitsgerät (1) eine Tiefeneinstellvorrichtung (181, 182, 183) zum Einstellen der Arbeitstiefe und eine Bodendruckeinstellvorrichtung aufweist, wobei die Tiefeneinstellvorrichtung (181, 182, 183) einen Positionssensor (184) zum Aufzeichnen des zweiten Parameters aufweist.

12. Landwirtschaftliches Arbeitsgerät (1) nach Anspruch 11, wobei der Aktuator (183) einen Positionssensor (184) zum Aufzeichnen des zweiten Parameters aufweist.

## Revendications

1. Procédé d'étalonnage d'une profondeur de travail d'une machine agricole (1) servant à distribuer un matériau granulaire dans le sol sur lequel la machine agricole se déplace,
la machine agricole (1) comportant une unité de sortie (17) comprenant un outil d'interaction avec le sol (173) servant à former un sillon, une roue de jauge (174), et au moins un actionneur (183) servant à régler la position de la roue de jauge (174) relativement à l'outil (173),
le procédé comprenant :
placer la machine agricole (1) sur une surface de sol plane et suffisamment dure pour que l'outil (173) ne pénètre pas dans la surface de sol,
une charge de l'unité de sortie (17) portant sur l'un de l'outil (173) et de la roue de jauge (174),
utiliser l'actionneur (183) pour transférer la charge à l'autre de l'outil (173) et de la roue de jauge (174),
enregistrer un premier paramètre de l'actionneur (183) durant le transfert de la charge, ledit premier paramètre indiquant une force sur l'actionneur (183),
enregistrer un second paramètre pour la roue de jauge (174) relativement à l'outil (173) durant le transfert de la charge, ledit second paramètre indiquant une position verticale relative entre la roue de jauge (174) et l'outil (173),
identifier un changement du premier paramètre se produisant lors du transfert de la charge, et
associer le changement à une valeur du second paramètre.

2. Procédé selon la revendication 1, dans lequel l'actionneur (183) est conçu pour régler la position de la roue de jauge (174) relativement à l'outil (173), le procédé comprenant le fait de transférer le poids de l'outil (173) à la roue de jauge (174), et dans lequel le premier paramètre indique une augmentation de la charge sur l'actionneur (183).

3. Procédé selon la revendication 1, dans lequel l'actionneur (183) est conçu pour régler la position de la roue de jauge (174) relativement à l'outil (173), le procédé comprenant le fait de transférer le poids de la roue de jauge (174) à l'outil (173), et dans lequel le premier paramètre indique une diminution de la charge sur l'actionneur (183).

4. Procédé selon l'une quelconque des revendications précédentes, dans lequel l'actionneur (183) est conçu pour ajuster :
une seule unité de sortie (17) ;
un sous-ensemble des unités de sortie (17) de la machine agricole (1) ; ou
toutes les unités de sortie (17) de la machine agricole (1).

5. Procédé selon l'une quelconque des revendications précédentes, dans lequel l'actionneur (183) est un actionneur électrique, et dans lequel ledit premier paramètre indique un courant d'attaque pour l'actionneur, et dans lequel ledit changement comprend un changement du courant d'attaque.

6. Procédé selon l'une quelconque des revendications 1 à 4, dans lequel l'actionneur (183) est un actionneur hydraulique, et dans lequel ledit premier paramètre indique une pression dans l'actionneur, et dans lequel le changement comprend un changement de la pression.

7. Procédé selon l'une quelconque des revendications précédentes, dans lequel l'unité de sortie comprend un châssis d'unité (171) qui est adapté de manière mobile sur un châssis de machine (12), dans lequel l'outil (173) et la roue de jauge (174) sont supportés par le châssis d'unité (171).

8. Procédé selon l'une quelconque des revendications précédentes, dans lequel l'outil comprend au moins un outil discoïde, tel qu'un disque traceur de sillon de semis.

9. Procédé selon la revendication 8, dans lequel la roue de jauge (174) est en superposition avec l'outil discoïde (173), selon une vue dans un plan vertical contenant une direction de travail (F).

10. Procédé selon l'une quelconque des revendications précédentes, comprenant, en outre, une étape dans laquelle, lorsque la machine agricole (1) est entraînée sur un champ, une profondeur de travail est définie sur la base de ladite association du changement à une valeur du second paramètre.

11. Machine agricole (1) servant à distribuer un matériau granulaire dans le sol sur lequel la machine agricole se déplace, comprenant :
une unité de sortie (17) comprenant un outil d'interaction avec le sol (173) servant à former un sillon,
une roue de jauge (174),
au moins un actionneur (183) servant à régler la position de la roue de jauge (174) relativement à l'outil (173), et
une unité de commande (20) qui est conçue pour commander l'actionneur (183),
dans laquelle l'unité de commande (20) est conçue :
lorsque la machine agricole (1) est placée sur une surface de sol plane et suffisamment dure pour que l'outil (173) ne pénètre pas dans la surface de sol, de telle sorte qu'une charge de l'unité de sortie (17) porte sur l'un de l'outil (173) et de la roue de jauge (174), pour manœuvrer l'actionneur (183) afin de transférer la charge à l'autre de l'outil (173) et de la roue de jauge (174),
pour enregistrer un premier paramètre de l'actionneur (183) durant le transfert de la charge, ledit premier paramètre indiquant une force sur l'actionneur (183, 191),
pour enregistrer un second paramètre pour la roue de jauge (174) relativement à l'outil (173) durant le transfert de la charge, ledit second paramètre indiquant une position verticale relative entre la roue de jauge (174) et l'outil (173),
pour identifier un changement du premier paramètre se produisant lors du transfert de la charge, et
pour associer le changement à une valeur du second paramètre,
la machine agricole (1) comportant un mécanisme d'ajustement de profondeur (181, 182, 183) servant à ajuster la profondeur de travail, et un mécanisme d'ajustement de pression au sol, le mécanisme d'ajustement de profondeur (181, 182, 183) comportant un détecteur de position (184) servant à enregistrer le second paramètre.

12. Machine agricole (1) selon la revendication 11, dans lequel l'actionneur (183) comporte un détecteur de position (184) servant à enregistrer le second paramètre.
